# EUROPÄISCHE PATENTSCHRIFT

(11) **EP 3 053 783 B1**
(45) Veröffentlichungstag und Bekanntmachung des Hinweises auf die Patenterteilung: **03.01.2018**
(21) Anmeldenummer: 16151241.3
(22) Anmeldetag: 14.01.2016
(51) Int. Cl.: B60R 21/017, B60R 16/03, B60L 3/04

(54) **AIRBAG-STEUERGERÄT, SPANNUNGSNETZWERK UND VERFAHREN ZUM ANSTEUERN EINES SPANNUNGSNETZWERKES IN EINEM KRAFTFAHRZEUG**
AIRBAG CONTROL DEVICE, VOLTAGE NETWORK AND METHOD FOR CONTROLLING A VOLTAGE NETWORK IN A MOTOR VEHICLE
APPAREIL DE COMMANDE D'AIRBAG, RÉSEAU DE TENSION ET PROCÉDÉ DE COMMANDE D'UN RÉSEAU DE TENSION DANS UN VÉHICULE AUTOMOBILE

(30) Priorität: 03.02.2015 DE 102015201814
(43) Veröffentlichungstag der Anmeldung: 10.08.2016
(73) Patentinhaber: Volkswagen Aktiengesellschaft, 38440 Wolfsburg (DE)
(72) Erfinder: Ortner, Andreas, 29399 Wahrenholz (DE); Deyda, Andreas, 38173 Erkerode (DE); Moik, Adam, 31228 Peine (DE); Wolf, Dietmar, 38557 Osloß (DE)

(56) Entgegenhaltungen:
- WO-A1-00/32445
- DE-A1- 10 203 408
- DE-A1- 10 315 531
- DE-A1-102009 051 293
- DE-A1-102010 045 581
- JP-A- 2006 246 623
- JP-A- 2011 217 544
- KR-B1- 101 257 923
- US-A1- 2014 309 827

## Beschreibung

Die Erfindung betrifft ein Airbag-Steuergerät, ein Spannungsnetzwerk in einem Kraftfahrzeug sowie ein Verfahren zum Ansteuern eines Spannungsnetzwerkes.

Aus der DE 10 2009 051 293 A1 ist eine gattungsgemäße Schaltungsanordnung zum Trennen einer Hochvoltspannungsquelle von einem elektrischen Energienetz in einem Kraftfahrzeug bekannt, wobei das Energienetz ein erstes Spannungsnetz mit einer Hochvolt-Batterie und ein zweites Spannungsnetz mit einer Niederspannungs-Bordnetzbatterie aufweist. Die Schaltungsanordnung weist eine Schalteinrichtung zur Abtrennung der Hochvolt-Batterie von dem ersten Spannungsnetz auf, wobei die Schalteinrichtung über einen Steuerstrom aus dem zweiten Spannungsnetz derart schaltbar ist, dass bei Zufuhr des Steuerstroms die Schalteinrichtung die Hochvolt-Batterie mit dem ersten Spannungsnetz verbindet und bei Unterbrechung des Steuerstroms die Schalteinrichtung die Hochvolt-Batterie von dem ersten Spannungsnetz trennt. Weiter weist die Schaltungsanordnung ein Airbag-Steuergerät auf, über welches ein Anforderungsfall zum Auslösen einer Sicherheitsfunktion detektierbar ist. Des Weiteren weist die Schaltungsanordnung ein Hochvolt-Steuergerät auf, welches über zumindest einen Datenbus mit dem Airbag-Steuergerät verbunden ist, wobei das Hochvolt-Steuergerät den Steuerstrom für die Schalteinrichtung steuert. Im Betrieb der Schaltungsanordnung gibt das Airbag-Steuergerät bei Detektion des Anforderungsfalls einen vorbestimmten Steuerbefehl auf den mindestens einen Datenbus und das Hochvolt-Steuergerät unterbricht als Reaktion auf den vorbestimmten Steuerbefehl die Zufuhr des Steuerstroms zu der Schalteinrichtung.

Üblicherweise weisen Airbag-Steuergeräte einen nicht-flüchtigen Speicher auf, in dem die Auslösung abgespeichert wird. Um die Zündung eines Airbags auch bei Spannungseinbrüchen zu gewährleisten, ist es weiter bekannt, mittels einer Hilfsspannungsquelle das Auslösesignal mindestens für eine Haltezeit aufrechtzuerhalten, bis die Airbags sicher gezündet haben.

Aus der DE 103 15 531 A1 ist eine Speicherzellenschaltung bekannt, die zur Realisierung eines zuverlässigen Speichers eine nicht-flüchtige Speicherzelle schafft. Dabei weißt die Speicherzellenschaltung einen ersten und einen zweiten Steuereingang auf, wobei der erste und der zweite Steuereingang voneinander getrennt sind. Diese Trennung erlaubt eine unterschiedliche Steuerspannung an dem ersten und dem zweiten Steuereingang. Diese unterschiedlichen Steuerspannung reduzieren die Spannungsbelastungen, so dass eine höhere bzw. maximale Betriebslebensdauer erreicht werden kann und mithin eine zuverlässigere nicht-flüchtige Speicherzelle.

Aus der WO 00/32445 ist eine Steuereinrichtung für ein mehrstufig auslösbares Kraftfahrzeug-Insassenschutzsystem bekannt, bei dem neben einem Crashsensor ein weiterer, redundanter Crashsensor, als sog. Safingsensor, verschaltet ist. Wobei der Safingsensor in Reihe mit der Zündstufe des Insassenschutzsystem geschaltet ist. Dadurch wird eine fehlerhafte Auslösung des Insassenschutzsystems vermieden.

Aus der DE 10 2010 045 581 A1 ist ein Verfahren zum Programmieren von Daten in einem nicht-flüchtigen Speicher mit einem ersten Programmiermodus bekannt, wobei mittels eines Steuergeräts auf einen zweiten Programmiermodus umgeschaltet werden kann. Dabei weist das Programmieren in dem zweiten Programmiermodus im Vergleich zum ersten Programmiermodus eine kürzere Programmierzeit und eine kürzere Datenhaltezeit auf.

Wenn ein Hochvolt-Steuergerät aufgrund eines Crashsignals die Hochvolt-Batterie abgetrennt hat, soll die Wieder-Zuschaltung nicht ohne vorherige Kontrolle erfolgen. Daher kann ein nichtflüchtiger Speicher im Hochvolt-Steuergerät vorgesehen werden, der dieses Ereignis abspeichert und dann beim Hochfahren die Zuschaltung verhindert. Allerdings kann es im Crashfall zu längeren Spannungseinbrüchen kommen, sodass ohne Hilfsspannungsquelle gegebenenfalls der Speichervorgang im Hochvolt-Steuergerät nicht abgeschlossen werden kann. Dann würde jedoch das Hochvolt-Steuergerät die Hochvolt-Batterie wieder zuschalten.

Der Erfindung liegt das technische Problem zugrunde, ein Airbag-Steuergerät sowie ein Spannungsnetzwerk zu schaffen, mittels derer ein Wieder-Zuschalten der Hochvolt-Batterie bei einem erfolgten Ansteuersignal des Airbag-Steuergeräts zuverlässiger verhindert wird. Ein weiteres technisches Problem ist das Zurverfügungstellung eines geeigneten Verfahrens zum Ansteuern eines Spannungsnetzwerkes.

Die Lösung des technischen Problems ergibt sich durch ein Airbag-Steuergerät mit den Merkmalen des Anspruchs 1, 2 und 3, ein Spannungsnetzwerk mit den Merkmalen des Anspruchs 5 sowie ein Verfahren mit den Merkmalen der Ansprüche 7, 8 und 9. Weitere vorteilhafte Ausgestaltungen der Erfindung ergeben sich aus den Unteransprüchen.

Das Airbag-Steuergerät ist derart ausgebildet, dass dieses in Abhängigkeit mindestens eines Sensorsignals mindestens ein Ansteuersignal für eine Ansteuerzeit generiert, wobei das Airbag-Steuergerät weiter derart ausgebildet ist, dass dieses für eine Haltezeit bei Ausfall einer Versorgungsspannung das mindestens eine Ansteuersignal aufrechterhalten kann, wobei das Airbag-Steuergerät mit mindestens einem nicht-flüchtigen Speicher ausgebildet ist, in dem die Generierung des mindestens einen Ansteuersignals abspeicherbar ist.

Weiter ist das Airbag-Steuergerät derart ausgebildet, dass bei Generierung des mindestens einen Ansteuersignals ein Status-Signal in dem mindestens einen nicht-flüchtigen Speicher oder in einem weiteren nicht-flüchtigen Speicher abgelegt wird, das wieder gelöscht wird, wenn das mindestens eine Ansteuersignal länger als eine Speicherzeit generiert wurde, wobei die Speicherzeit größer als die Haltezeit und kleiner/gleich der Ansteuerzeit ist, wobei bei einem Hochfahren des Airbag-Steuergeräts ein Ansteuersignal für eine zweite Ansteuerzeit erneut gesendet wird, wenn das Status-Signal noch gesetzt ist. Dabei ist die zweite Ansteuerzeit mindestens so lang wie die Speicherzeit. Hierdurch wird gewährleistet, dass auch bei einem länger andauernden Spannungseinbruch, wobei ein anderes Steuergerät (z.B. das Hochvolt-Steuergerät) noch nicht das Ereignis "Ansteuersignal" abspeichern konnte, beim Wieder-Hochfahren das Ansteuersignal noch einmal gesendet wird. Durch das erneute Senden wird ein Wiederzuschalten der Hochvolt-Batterie verhindert. Das erneute Senden durch das Nichterreichen der Zeit ta kann auf eine vordefinierte Anzahl von Zündungswechseln (Klemme 15 ein/aus) begrenzt sein.

In einer alternativen Ausführungsform ist das Airbag-Steuergerät derart ausgebildet, dass bei einem Hochfahren des Airbag-Steuergeräts ein Ansteuersignal für eine Ansteuerzeit generiert wird, wenn in dem mindestens einen nicht-flüchtigen Speicher die Generierung des mindestens einen Ansteuersignals abgespeichert ist. Auch hierdurch wird ein Wieder-Zuschalten der Hochvoltbatterie verhindert. Dabei wird auf das Status-Signal verzichtet, wobei jedoch gegebenenfalls auch unnötigerweise das Ansteuersignal erneut gesendet wird, weil das Hochvolt-Steuergerät das Ereignis bereits abgespeichert hatte.

In einer weiteren alternativen Ausführungsform ist das Airbag-Steuergerät derart ausgebildet, dass bei einem Hochfahren des Airbag-Steuergeräts auf Aufforderung eines weiteren Steuergeräts ein Ansteuersignal für eine zweite Ansteuerzeit generiert wird, wenn in dem mindestens einen nicht-flüchtigen Speicher die Generierung des mindestens einen Ansteuersignals abgespeichert wird. Der Vorteil dieser Ausführungsform ist, dass nur, wenn notwendig, das Ansteuersignal erneut gesendet wird, allerdings hat diese Ausführungsform einen erhöhten Kommunikationsbedarf.

In einer weiteren Ausführungsform wird die zweite Ansteuerzeit gleich der Ansteuerzeit gewählt. Dies reduziert den Steueraufwand im Airbag-Steuergerät und ist auf jeden Fall lang genug, damit das andere Steuergerät das Ereignis sicher abspeichern kann.

Das Spannungsnetzwerk in einem Kraftfahrzeug umfasst ein Hochvolt-Netz mit mindestens einer Hochvolt-Batterie, die über mindestens einen Schütz vom Hochvolt-Netz abtrennbar ist, und ein Niederspannungs-Bordnetz mit einer Bordnetzbatterie, einem Airbag-Steuergerät und einem Hochvolt-Steuergerät. Dabei können Schütze vorgesehen sein, um die Hochvolt-Batterie allpolig abzutrennen. Das Hochvolt-Steuergerät ist derart ausgebildet, dass dieses den mindestens einen Schütz mindestens in Abhängigkeit eines Ansteuersignals des Airbag-Steuergeräts ansteuert, wobei das Hochvolt-Steuergerät mit einem nicht-flüchtigen Speicher ausgebildet ist, in dem das Auftreten eines Ansteuersignals des Airbag-Steuergeräts abspeicherbar ist. Das Hochvolt-Steuergerät ist dabei derart ausgebildet, dass beim Hochfahren der mindestens eine Schütz nur geschlossen wird, wenn kein aktueller Eintrag eines Ansteuersignals im nicht-flüchtigen Speicher vorliegt. Zusätzlich ist das Airbag-Steuergerät wie zuvor beschrieben ausgebildet, sodass der Schütz auch nur geschlossen wird, wenn zuvor nicht ein Ansteuersignal erzeugt wurde, das nur nicht vom Hochvolt-Steuergerät oder einem anderen Steuergerät abgespeichert werden konnte. Hinsichtlich der Ausgestaltung des Airbag-Steuergeräts wird dabei vollinhaltlich auf die vorangegangenen Ausführungen Bezug genommen.

In einer weiteren Ausführungsform ist das Airbag-Steuergerät mit einem Energiespeicher oder einer Hilfsspannungsquelle ausgebildet oder dem Airbag-Steuergerät ist eine Hilfsspannungsquelle zugeordnet, mittels derer bei einem Spannungseinbruch die Spannungsversorgung des Airbag-Steuergerätes für die Haltezeit aufrechterhalten wird.

Hinsichtlich der verfahrensmäßigen Ausgestaltungen der Erfindung wird ebenfalls vollinhaltlich auf die vorangegangenen Ausführungen Bezug genommen.

Die Erfindung wird nachfolgend anhand eines bevorzugten Ausführungsbeispiels näher erläutert. Die Figuren zeigen:
- Fig. 1: ein schematisches Blockschaltbild eines Spannungsnetzwerks in einem Kraftfahrzeug,
- Fig. 2a: Signalverläufe bei einem Spannungseinbruch kürzer als die Haltezeit ohne weitere Maßnahmen,
- Fig. 2b: Signalverläufe bei einem Spannungseinbruch länger als die Haltezeit ohne weitere Maßnahmen,
- Fig. 2c: Signalverläufe bei einem Spannungseinbruch kürzer als die Haltezeit mit einem Status-Signal und
- Fig. 2d: Signalverläufe bei einem Spannungseinbruch länger als die Haltezeit mit einem Status-Signal.

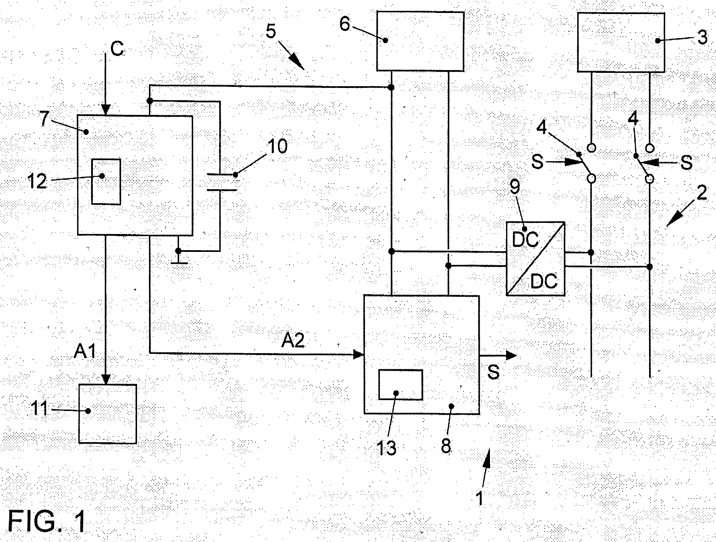

Das in Fig. 1 dargestellte Spannungsnetzwerk 1 umfasst ein Hochvolt-Netz 2 mit einer Hochvolt-Batterie 3, die über zwei Schütze 4 vom Hochvolt-Netz 2 abtrennbar ist. Weiter umfasst das Spannungsnetzwerk 1 ein Niederspannungs-Bordnetz 5 mit einer Bordnetzbatterie 6, einem Airbag-Steuergerät 7 und einem Hochvolt-Steuergerät 8. Zwischen dem Hochvolt-Netz 2 und dem Niederspannungs-Bordnetz 5 ist ein DC/DC-Wandler 9 angeordnet, über den die Hochvolt-Batterie 3 die Bordnetzbatterie 6 laden kann. Weiter umfasst das Niederspannungs-Bordnetz 5 eine Hilfsspannungsquelle 10, die dem Airbag-Steuergerät 7 zugeordnet ist. Dem Airbag-Steuergerät 7 werden Sensordaten zugeführt, anhand derer das Airbag-Steuergerät 7 entscheidet, ob ein Airbag 11 gezündet werden soll oder nicht. Die Sensordaten sind beispielsweise Beschleunigungswerte und Sitzbelegungen. Es können aber noch weitere Sensordaten beispielsweise von Kameras herangezogen werden. Nachfolgend werden diese Sensordaten zusammenfassend als Crashsignal C beschrieben. Das Airbag-Steuergerät 7 weist einen nicht-flüchtigen Speicher 12 auf, der beispielsweise als EEPROM ausgebildet ist. Ebenso weist das Hochvolt-Steuergerät 8 einen nicht-flüchtigen Speicher 13 auf, der beispielsweise auch als EEPROM ausgebildet ist. In Abhängigkeit des Crashsignals C erzeugt das Airbag-Steuergerät 7 ein Ansteuersignal A1 für den mindestens einen Airbag 11 sowie ein Ansteuersignal A2 für das Hochvolt-Steuergerät 8.

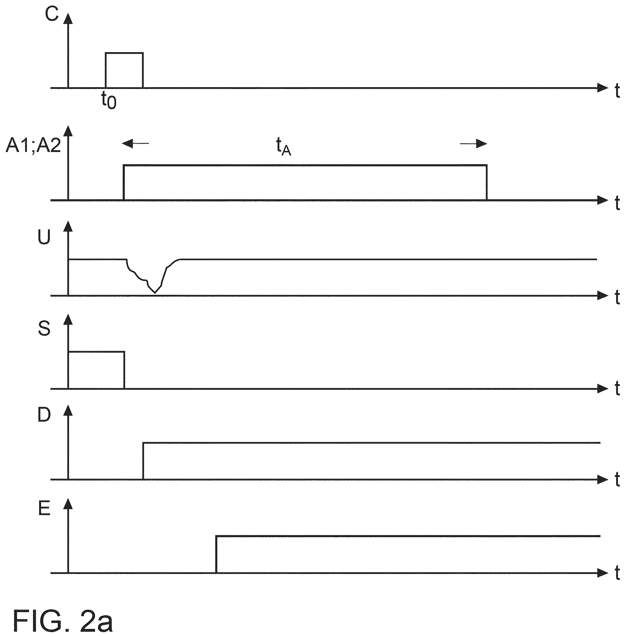

Dabei ist die Hilfsspannungsquelle 10 derart dimensioniert, dass bei einem Spannungseinbruch im Niederspannungs-Bordnetz 5 die Ansteuersignale A1, A2 wenigstens noch eine Haltezeit t_{H} erzeugt werden, sodass der Airbag 11 sicher gezündet wird. Die Generierung der Ansteuersignale A1, A2 wird dabei im nicht-flüchtigen Speicher 12 abgespeichert. Das Hochvolt-Steuergerät 8 erzeugt Steuersignale S, in Abhängigkeit derer die Schütze 4 angesteuert werden. Erhält dann das Hochvolt-Steuergerät 8 ein Ansteuersignal A2, so werden die Schütze 4 geöffnet und das Auftreten des Ansteuersignals A2 im nicht-flüchtigen Speicher 13 abgespeichert. Dieser Speichervorgang benötigt jedoch eine gewisse Zeit. Dies soll nun anhand der Fig. 2a-2d näher erläutert werden.

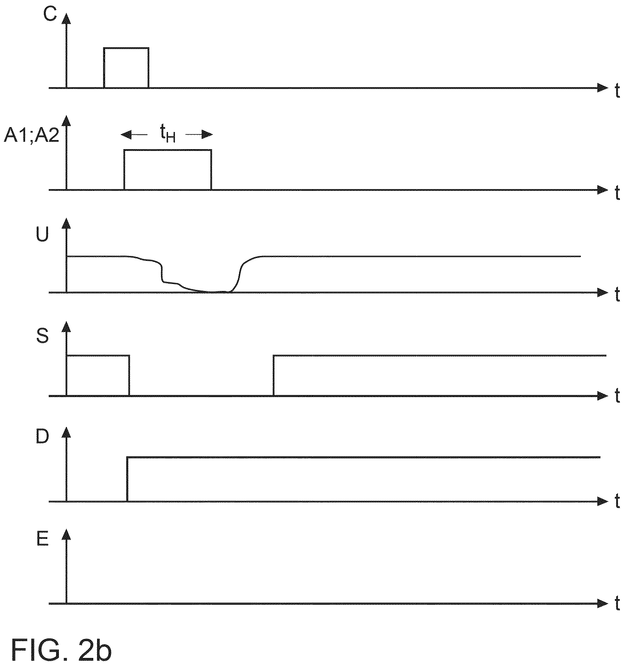

Dabei sind in den Fig. 2a und 2b verschiedene Signalverläufe ohne weitere Maßnahmen dargestellt. Zu einem Zeitpunkt t₀ tritt ein Crashsignal C auf, woraufhin das Airbag-Steuersignal 7 die Ansteuersignale A1, A2 für eine Ansteuerzeit t_{A} generiert. Die Ansteuerzeit t_{A} ist beispielsweise 10 s. Kommt es dabei zu einer Unterbrechung der Versorgungsspannung U, die kleiner als die Haltezeit t_{H} ist, so hat dies keine Auswirkungen auf die Generierung der Ansteuersignale A1, A2. Aufgrund des Ansteuersignals A2 öffnet das Hochvolt-Steuergerät 8 die Schütze 4 (S = 0). Mit einem geringen Zeitverzug wird das Auftreten des Crashsignals C bzw. das Generieren der Ansteuersignale A1, A2 im Airbag-Steuergerät 7 in dem nicht-flüchtigen Speicher 12 als Signal D abgespeichert. Die Unterbrechung der Versorgungsspannung U stellt dabei kein Problem dar, da die Hilfsspannungsquelle 10 für die Haltezeit t_{H} die Spannungsversorgung für das Airbag-Steuergerät 7 übernimmt. Beim Hochvolt-Steuergerät 8 kann der Speichervorgang zunächst nicht durchgeführt werden, solange die Versorgungsspannung U unterbrochen ist. Wenn dann jedoch das Hochvolt-Steuergerät 8 wieder hochfährt, weil die Versorgungsspannung U wieder zur Verfügung steht, so liegt das Ansteuersignal A2 noch an. Die Schütze 4 bleiben offen und das Hochvolt-Steuergerät 8 speichert das Vorhandensein des Ansteuersignals A2 als Signal E im nicht-flüchtigen Speicher 13 ab. Somit wird ein Wieder-Zuschalten der Schütze 4 ohne entsprechende Kontrolle durch Service-Personal wirksam verhindert.

Im Beispiel gemäß Fig. 2b ist hingegen der Spannungseinbruch der Versorgungsspannung U länger als die Haltezeit t_{H}, sodass nach der Haltezeit t_{H} auch die Versorgungsspannung des Airbag-Steuergeräts 7 zusammenbricht. Fährt dann das Airbag-Steuergerät 7 wieder hoch, sendet dieses kein Ansteuersignal mehr, da der Airbag 11 ausgelöst hat. Allerdings hat das Hochvolt-Steuergerät 8 keine Information E abspeichern können, sodass die Schütze 4 wieder geschlossen werden würden (S = 1).

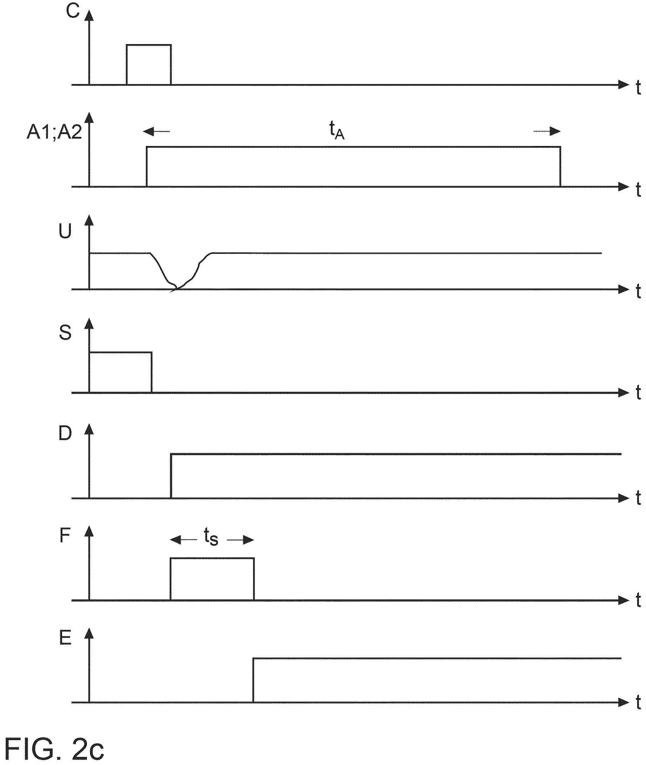

Zur Lösung dieses Problems wird zusätzlich ein Status-Signal F im nicht-flüchtigen Speicher 12 abgespeichert (siehe Fig. 2c). Dieses Status-Signal F wird zusammen mit dem Signal D gesetzt bzw. abgespeichert und nach einer Speicherzeit t_{S} wieder zurückgesetzt. Die Speicherzeit t_{S} ist dabei länger als die Haltezeit t_{H}. Liegt dann das Ansteuersignal A2 für die Speicherzeit t_{S} an, kann daraus geschlossen werden, dass es nur einen Spannungseinbruch kürzer als die Haltezeit t_{H} gegeben haben kann, sodass das Hochvolt-Steuergerät 8 genügend Zeit hat, um das Signal E abzuspeichern und ein Wieder-Zuschalten der Schütze 4 zu verhindern.

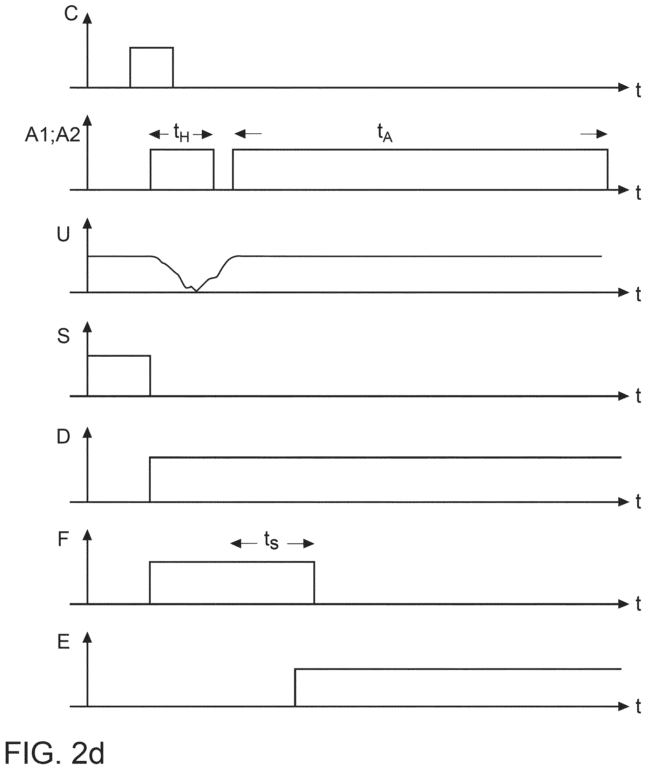

In der Fig. 2d ist nun die Situation dargestellt, dass der Spannungseinbruch der Versorgungsspannung U länger als die Haltezeit t_{H} ist. Dann liegt das Ansteuersignal A2 auch nur für die Haltezeit t_{H} an, also kürzer als die Speicherzeit t_{S}. Entsprechend wird das Status-Signal F nicht zurückgesetzt. Liegt dann wieder Versorgungsspannung U an, fährt das Airbag-Steuergerät 7 wieder hoch und erkennt, dass das Status-Signal F noch gesetzt ist. Als Reaktion wird das Ansteuersignal A2 erneut für die Ansteuerzeit t_{A} gesendet. Liegt dann das Ansteuersignal A2 länger als die Speicherzeit t_{S} an, kann das Status-Signal F zurückgesetzt werden, da dann sichergestellt ist, dass das Hochvolt-Steuergerät 8 das Signal E sicher abgespeichert hat. Die Schütze 4 bleiben offen.

## Patentansprüche

1. Airbag-Steuergerät (7), wobei das Airbag-Steuergerät (7) derart ausgebildet ist, dass dieses in Abhängigkeit mindestens eines Sensorsignals (C) mindestens ein Ansteuersignal (A1, A2) für eine Ansteuerzeit (t_{A}) generiert, wobei das Airbag-Steuergerät (7) weiter derart ausgebildet ist, dass dieses für eine Haltezeit (t_{H}) bei Ausfall einer Versorgungsspannung (U) das mindestens eine Ansteuersignal (A1, A2) aufrechterhalten kann, wobei das Airbag-Steuergerät (7) mit mindestens einem nicht-flüchtigen Speicher (12) ausgebildet ist, in dem die Generierung des mindestens einen Ansteuersignals (A1, A2) abspeicherbar ist,
**dadurch gekennzeichnet, dass**
das Airbag-Steuergerät (7) derart ausgebildet ist, dass bei Generierung des mindestens einen Ansteuersignals (A1, A2) ein Status-Signal (F) in dem mindestens einen nicht-flüchtigen Speicher (12) oder in einem weiteren nicht-flüchtigen Speicher abgelegt wird, das wieder gelöscht wird, wenn das mindestens eine Ansteuersignal (A1, A2) länger als eine Speicherzeit (t_{S}) generiert wurde, wobei die Speicherzeit (t_{S}) länger als die Haltezeit (t_{H}) und kleiner/gleich der Ansteuerzeit (t_{A}) ist, wobei bei einem Hochfahren des Airbag-Steuergeräts (7) ein Ansteuersignal (A2) für eine zweite Ansteuerzeit erneut gesendet wird, wenn das Status-Signal (F) noch gesetzt ist.

2. Airbag-Steuergerät, wobei das Airbag-Steuergerät (7) derart ausgebildet ist, dass dieses in Abhängigkeit mindestens eines Sensorsignals (C) mindestens ein Ansteuersignal (A1, A2) für eine Ansteuerzeit (t_{A}) generiert, wobei das Airbag-Steuergerät (7) weiter derart ausgebildet ist, dass dieses für eine Haltezeit (t_{H}) bei Ausfall einer Versorgungsspannung (U) das mindestens eine Ansteuersignal (A1, A2) aufrechterhalten kann, wobei das Airbag-Steuergerät (7) mit mindestens einem nicht-flüchtigen Speicher (12) ausgebildet ist, in dem die Generierung des mindestens einen Ansteuersignals (A1, A2) abspeicherbar ist,
**dadurch gekennzeichnet, dass**
das Airbag-Steuergerät (7) derart ausgebildet ist, dass bei einem Hochfahren des Airbag-Steuergerätes (7) ein Ansteuersignal (A2) für eine zweite Ansteuerzeit generiert wird, wenn in dem mindestens einen nicht-flüchtigen Speicher (12) die Generierung des mindestens einen Ansteuersignals (A1, A2) abgespeichert ist.

3. Airbag-Steuergerät, wobei das Airbag-Steuergerät (7) derart ausgebildet ist, dass dieses in Abhängigkeit mindestens eines Sensorsignals (C) mindestens ein Ansteuersignal (A1, A2) für eine Ansteuerzeit (t_{A}) generiert, wobei das Airbag-Steuergerät (7) weiter derart ausgebildet ist, dass dieses für eine Haltezeit (t_{H}) bei Ausfall einer Versorgungsspannung (U) das mindestens eine Ansteuersignal (A1, A2) aufrechterhalten kann, wobei das Airbag-Steuergerät (7) mit mindestens einem nicht-flüchtigen Speicher (12) ausgebildet ist, in dem die Generierung des mindestens einen Ansteuersignals (A1, A2) abspeicherbar ist,
**dadurch gekennzeichnet, dass**
das Airbag-Steuergerät (7) derart ausgebildet ist, dass bei einem Hochfahren des Airbag-Steuergeräts (7) auf Anforderung eines weiteren Steuergeräts ein Ansteuersignal (A2) für eine zweite Ansteuerzeit generiert wird, wenn in dem mindestens einen nicht-flüchtigen Speicher (12) die Generierung des mindestens einen Ansteuersignals (A1, A2) abgespeichert ist.

4. Airbag-Steuergerät nach einem der Ansprüche 1 bis 3, **dadurch gekennzeichnet, dass** die zweite Ansteuerzeit gleich der Ansteuerzeit (t_{A}) gewählt ist.

5. Spannungsnetzwerk (1) in einem Kraftfahrzeug, umfassend ein Hochvolt-Netz (2) mit mindestens einer Hochvolt-Batterie (3), die über mindestens einen Schütz (4) vom Hochvolt-Netz (2) abtrennbar ist, und ein Niederspannungs-Bordnetz (5) mit einer Bordnetzbatterie (6), einem Airbag-Steuergerät (7) und einem Hochvolt-Steuergerät (8), wobei das Hochvolt-Steuergerät (8) derart ausgebildet ist, dass dieses den mindestens einen Schütz (4) mindestens in Abhängigkeit eines Ansteuersignals (A2) des Airbag-Steuergeräts (7) ansteuert, wobei das Hochvolt-Steuergerät (8) mit einem nicht-flüchtigen Speicher (13) ausgebildet ist, in dem das Auftreten eines Ansteuersignals (A2) des Airbag-Steuergeräts (7) als Signal (E) abspeicherbar ist, wobei das Hochvolt-Steuergerät (8) derart ausgebildet ist, dass beim Hochfahren der mindestens eine Schütz (4) nur geschlossen wird, wenn kein aktueller Eintrag eines Signals (E) im nicht-flüchtigen Speicher (13) vorliegt,
**dadurch gekennzeichnet, dass**
das Airbag-Steuergerät (7) als Airbag-Steuergerät (7) nach einem der Ansprüche 1 bis 4 ausgebildet ist.

6. Spannungsnetzwerk (1) nach Anspruch 5, **dadurch gekennzeichnet, dass** das Airbag-Steuergerät (7) mit einem Energiespeicher oder mit einer Hilfsspannungsquelle (10) ausgebildet ist oder dem Airbag-Steuergerät (7) eine Hilfsspannungsquelle (10) zugeordnet ist, mittels derer bei einem Spannungseinbruch die Spannungsversorgung (U) das Airbag-Steuergerät (7) für die Haltezeit (t_{H}) aufrechterhalten wird.

7. Verfahren zum Ansteuern eines Spannungsnetzwerks (1) in einem Kraftfahrzeug, wobei das Spannungsnetzwerk (1) ein Hochvolt-Netz (3) mit einer Hochvolt-Batterie (3), die über mindestens einen Schütz (4) vom Hochvolt-Netz (2) abtrennbar ist, und ein Niederspannungs-Bordnetz (5) mit einer Bordnetz-Batterie (6), einem Airbag-Steuergerät (7) und einem Hochvolt-Steuergerät (8) aufweist, wobei das Hochvolt-Steuergerät (8) den mindestens einen Schütz (4) mindestens in Abhängigkeit eines Ansteuersignals (A2) des Airbag-Steuergeräts (7) ansteuert, wobei das Hochvolt-Steuergerät (8) als auch das Airbag-Steuergerät (7) jeweils mit mindestens einem nicht-flüchtigen Speicher (12, 13) ausgebildet sind, in dem das Auftreten eines Ansteuersignals des Airbag-Steuergeräts (7) abgespeichert wird, wobei beim Hochfahren des Hochvolt-Steuergeräts (8) der mindestens eine Schütz (4) nur dann geschlossen wird, wenn kein aktueller Eintrag eines Ansteuersignals (A2) als Signal (E) im nicht-flüchtigen Speicher (13) des Hochvolt-Steuergeräts (8) vorliegt, wobei das Airbag-Steuergerät (7) bei vorhandener Spannungsversorgung (U) das Ansteuersignal (A2) eine Ansteuerzeit (t_{A}) lang bereitstellt und bei Ausfall der Spannungsversorgung (U) mindestens für eine Haltezeit (t_{H}) bereithält,
**dadurch gekennzeichnet, dass**
das Airbag-Steuergerät (7) bei der Generierung des mindestens einen Ansteuersignals (A1, A2) ein Status-Signal (F) in dem mindestens einen nicht-flüchtigen Speicher (12) des Airbag-Steuergeräts (7) oder in einem weiteren nicht-flüchtigen Speicher der Airbag-Steuergeräts (7) ablegt, wobei das Status-Signal (F) wieder gelöscht wird, wenn das mindestens eine Ansteuersignal (A1, A2) länger als eine Speicherzeit (t_{S}) generiert wird, wobei die Speicherzeit (t_{S}) länger als die Haltezeit (t_{H}) und kleiner/gleich der Ansteuerzeit (t_{A}) ist, wobei bei einem Hochfahren des Airbag-Steuergeräts (7) ein Ansteuersignal (A2) für eine zweite Ansteuerzeit erneut gesendet wird, wenn das Status-Signal (F) noch gesetzt ist.

8. Verfahren zum Ansteuern eines Spannungsnetzwerks (1) in einem Kraftfahrzeug, wobei das Spannungsnetzwerk (1) ein Hochvolt-Netz (3) mit einer Hochvolt-Batterie (3), die über mindestens einen Schütz (4) vom Hochvolt-Netz (2) abtrennbar ist, und ein Niederspannungs-Bordnetz (5) mit einer Bordnetz-Batterie (6), einem Airbag-Steuergerät (7) und einem Hochvolt-Steuergerät (8) aufweist, wobei das Hochvolt-Steuergerät (8) den mindestens einen Schütz (4) mindestens in Abhängigkeit eines Ansteuersignals (A2) des Airbag-Steuergeräts (7) ansteuert, wobei das Hochvolt-Steuergerät (8) als auch das Airbag-Steuergerät (7) jeweils mit mindestens einem nicht-flüchtigen Speicher (12, 13) ausgebildet sind, in dem das Auftreten eines Ansteuersignals des Airbag-Steuergeräts (7) abgespeichert wird, wobei beim Hochfahren des Hochvolt-Steuergeräts (8) der mindestens eine Schütz (4) nur dann geschlossen wird, wenn kein aktueller Eintrag eines Ansteuersignals (A2) als Signal (E) im nicht-flüchtigen Speicher (13) des Hochvolt-Steuergeräts (8) vorliegt, wobei das Airbag-Steuergerät (7) bei vorhandener Spannungsversorgung (U) das Ansteuersignal (A2) eine Ansteuerzeit (t_{A}) lang bereitstellt und bei Ausfall der Spannungsversorgung (U) mindestens für eine Haltezeit (t_{H}) bereithält,
**dadurch gekennzeichnet, dass**
bei einem Hochfahren des Airbag-Steuergeräts (7) ein Ansteuersignal (A2) für eine zweite Ansteuerzeit generiert wird, wenn in dem mindestens einen nicht-flüchtigen Speicher (12) die Generierung des mindestens einen Ansteuersignals (A2) abgespeichert ist.

9. Verfahren zum Ansteuern eines Spannungsnetzwerks (1) in einem Kraftfahrzeug, wobei das Spannungsnetzwerk (1) ein Hochvolt-Netz (3) mit einer Hochvolt-Batterie (3), die über mindestens einen Schütz (4) vom Hochvolt-Netz (2) abtrennbar ist, und ein Niederspannungs-Bordnetz (5) mit einer Bordnetz-Batterie (6), einem Airbag-Steuergerät (7) und einem Hochvolt-Steuergerät (8) aufweist, wobei das Hochvolt-Steuergerät (8) den mindestens einen Schütz (4) mindestens in Abhängigkeit eines Ansteuersignals (A2) des Airbag-Steuergeräts (7) ansteuert, wobei das Hochvolt-Steuergerät (8) als auch das Airbag-Steuergerät (7) jeweils mit mindestens einem nicht-flüchtigen Speicher (12, 13) ausgebildet sind, in dem das Auftreten eines Ansteuersignals des Airbag-Steuergeräts (7) abgespeichert wird, wobei beim Hochfahren des Hochvolt-Steuergeräts (8) der mindestens eine Schütz (4) nur dann geschlossen wird, wenn kein aktueller Eintrag eines Ansteuersignals (A2) als Signal (E) im nicht-flüchtigen Speicher (13) des Hochvolt-Steuergeräts (8) vorliegt, wobei das Airbag-Steuergerät (7) bei vorhandener Spannungsversorgung (U) das Ansteuersignal (A2) eine Ansteuerzeit (t_{A}) lang bereitstellt und bei Ausfall der Spannungsversorgung (U) mindestens für eine Haltezeit (t_{H}) bereithält,
**dadurch gekennzeichnet, dass**
beim Hochfahren des Hochvolt-Steuergeräts (8) eine Aufforderung an das Airbag-Steuergerät (7) sendet, wenn im nicht-flüchtigen Speicher (13) des Hochvolt-Steuergeräts (8) kein Ansteuersignal (E) vorhanden ist, wobei das Airbag-Steuergerät (7) auf die Aufforderung ein Ansteuersignal (A2) für eine zweite Ansteuerzeit generiert, wenn in dem mindestens einen nicht-flüchtigen Speicher (12) in dem Airbag-Steuergerät (7) die Generierung des mindestens einen Ansteuersignals (A2) abgespeichert ist.

10. Verfahren nach einem der Ansprüche 7 bis 9, **dadurch gekennzeichnet, dass** die zweite Ansteuerzeit gleich lang wie die Ansteuerzeit (t_{A}) gewählt wird.

## Claims

1. Airbag control device (7), wherein the airbag control device (7) is embodied in such a way that it generates at least one actuation signal (A1, A2) for an actuation time (t_{A}) as a function of at least one sensor signal (C), wherein the airbag control device (7) is also embodied in such a way that in the event of failure of a voltage supply (U) it can maintain the at least one actuation signal (A1, A2) for a holding time (t_{H}), wherein the airbag control device (7) is embodied with at least one non-volatile memory (12) in which the generation of the at least one actuation signal (A1, A2) can be stored,
**characterized in that**
the airbag control device (7) is embodied in such a way that when the at least one actuation signal (A1, A2) is generated, a status signal (F) is stored in the at least one non-volatile memory (12) or in a further non-volatile memory, which status signal (F) is deleted again if the at least one actuation signal (A1, A2) was generated for longer than a storage time (t_{S}), wherein the storage time (t_{S}) is longer than the holding time (t_{H}) and less than/equal to the actuation time (t_{A}), wherein when the airbag control device (7) is powered up an actuation signal (A2) is transmitted again for a second actuation time if the status signal (F) is still set.

2. Airbag control device, wherein the airbag control device (7) is embodied in such a way that it generates at least one actuation signal (A1, A2) for an actuation time (t_{A}) as a function of at least one sensor signal (C), wherein the airbag control device (7) is also embodied in such a way that in the event of failure of a voltage supply (U) it can maintain the at least one actuation signal (A1, A2) for a holding time (t_{H}), wherein the airbag control device (7) is embodied with at least one non-volatile memory (12) in which the generation of the at least one actuation signal (A1, A2) can be stored,
**characterized in that**
the airbag control device (7) is embodied in such a way that when the airbag control device (7) is powered up, an actuation signal (A2) is generated for a second actuation time if the generation of the at least one actuation signal (A1, A2) is stored in the at least one non-volatile memory (12).

3. Airbag control device, wherein the airbag control device (7) is embodied in such a way that it generates at least one actuation signal (A1, A2) for an actuation time (t_{A}) as a function of at least one sensor signal (C), wherein the airbag control device (7) is also embodied in such a way that in the event of failure of a voltage supply (U) it can maintain the at least one actuation signal (A1, A2) for a holding time (t_{H}), wherein the airbag control device (7) is embodied with at least one non-volatile memory (12) in which the generation of the at least one actuation signal (A1, A2) can be stored,
**characterized in that**
the airbag control device (7) is embodied in such a way that when the airbag control device (7) is powered up at the request of a further control device, an actuation signal (A2) is generated for a second actuation time if the generation of the at least one actuation signal (A1, A2) is stored in the at least one non-volatile memory (12).

4. Airbag control device according to one of Claims 1 to 3, **characterized in that** the second actuation time is selected to be equal to the actuation time (t_{A}) .

5. Voltage network (1) in a motor vehicle, comprising a high-voltage power system (2) having at least one high-voltage battery (3) which can be disconnected from the high-voltage power system (2) by means of at least one contactor (4), and a low-voltage on-board power system (5) with an on-board power system battery (6), an airbag control device (7) and a high-voltage control device (8), wherein the high-voltage control device (8) is embodied in such a way that it actuates the at least one contactor (4) at least as a function of an actuation signal (A2) of the airbag control device (7), wherein the high-voltage control device (8) is embodied with a non-volatile memory (13) in which the occurrence of an actuation signal (A2) of the airbag control device (7) can be stored as a signal (E), wherein the high-voltage control device (8) is embodied in such a way that when powering up occurs the at least one contactor (4) is closed only if there is no current entry of a signal (E) present in the non-volatile memory (13),
**characterized in that**
the airbag control device (7) is embodied as an airbag control device (7) according to one of Claims 1 to 4.

6. Voltage network (1) according to Claim 5,
**characterized in that** the airbag control device (7) is embodied with an energy store or with an auxiliary voltage source (10) or the airbag control device (7) is assigned an auxiliary voltage source (10), by means of which the voltage supply (U) the airbag control device (7) is maintained for the holding time (t_{H}) in the event of a voltage dip.

7. Method for actuating a voltage network (1) in a motor vehicle, wherein the voltage network (1) has a high-voltage power system (3) with a high-voltage battery (3) which can be disconnected from the high-voltage power system (2) by means of at least one contactor (4), and a low-voltage on-board power system (5) with an on-board power system battery (6), an airbag control device (7) and a high-voltage control device (8), wherein the high-voltage control device (8) actuates the at least one contactor (4) at least as a function of an actuation signal (A2) of the airbag control device (7), wherein the high-voltage control device (8) and the airbag control device (7) are each embodied with at least one non-volatile memory (12, 13) in which the occurrence of an actuation signal of the airbag control device (7) is stored, wherein when the high-voltage control device (8) is powered up the at least one contactor (4) is closed only if there is no current entry of an actuation signal (A2) present as a signal (E) in the non-volatile memory (13) of the high-voltage control device (8), wherein when a voltage supply (U) is present the airbag control device (7) makes available the actuation signal (A2) for an actuation time (t_{A}), and when the voltage supply (U) fails it keeps it available for at least a holding time (t_{H}),
**characterized in that**
when the at least one actuation signal (A1, A2) is generated, the airbag control device (7) stores a status signal (F) in the at least one non-volatile memory (12) of the airbag control device (7) or in a further non-volatile memory of the airbag control device (7), wherein the status signal (F) is deleted again if the at least one actuation signal (A1, A2) is generated for longer than a storage time (t_{S}), wherein the storage time (its) is longer than the holding time (t_{H}) and less than/equal to the actuation time (t_{A}), wherein when the airbag control device (7) is powered up an actuation signal (A2) is transmitted again for a second actuation time if the status signal (F) is still set.

8. Method for actuating a voltage network (1) in a motor vehicle, wherein the voltage network (1) has a high-voltage power system (3) with a high-voltage battery (3) which can be disconnected from the high-voltage power system (2) by means of at least one contactor (4), and a low-voltage on-board power system (5) with an on-board power system battery (6), an airbag control device (7) and a high-voltage control device (8), wherein the high-voltage control device (8) actuates the at least one contactor (4) at least as a function of an actuation signal (A2) of the airbag control device (7), wherein the high-voltage control device (8) and the airbag control device (7) are each embodied with at least one non-volatile memory (12, 13) in which the occurrence of an actuation signal of the airbag control device (7) is stored, wherein when the high-voltage control device (8) is powered up, the at least one contactor (4) is closed only if there is no current entry of an actuation signal (A2) present as a signal (E) in the non-volatile memory (13) of the high-voltage control device (8), wherein when a voltage supply (U) is present the airbag control device (7) makes available the actuation signal (A2) for an actuation time (t_{A}), and when the voltage supply (U) fails it keeps it available for at least a holding time (t_{H}),
**characterized in that**
when the airbag control device (7) is powered up an actuation signal (A2) is generated for a second actuation time if the generation of the at least one actuation signal (A2) is stored in the at least one non-volatile memory (12).

9. Method for actuating a voltage network (1) in a motor vehicle, wherein the voltage network (1) has a high-voltage power system (3) with a high-voltage battery (3) which can be disconnected from the high-voltage power system (2) by means of at least one contactor (4), and a low-voltage on-board power system (5) with an on-board power system battery (6), an airbag control device (7) and a high-voltage control device (8), wherein the high-voltage control device (8) actuates the at least one contactor (4) at least as a function of an actuation signal (A2) of the airbag control device (7), wherein the high-voltage control device (8) and the airbag control device (7) are each embodied with at least one non-volatile memory (12, 13) in which the occurrence of an actuation signal of the airbag control device (7) is stored, wherein when the high-voltage control device (8) is powered up, the at least one contactor (4) is closed only if there is no current entry of an actuation signal (A2) present as a signal (E) in the non-volatile memory (13) of the high-voltage control device (8), wherein when a voltage supply (U) is present the airbag control device (7) makes available the actuation signal (A2) for an actuation time (t_{A}), and when the voltage supply (U) fails it keeps it available for at least a holding time (t_{H}),
**characterized in that**
when the high-voltage control device (8) is powered up, a request is transmitted to the airbag control device (7) if no actuation signal (E) is present in the non-volatile memory (13) of the high-voltage control device (8), wherein in response to the request the airbag control device (7) generates an actuation signal (A2) for a second actuation time if the generation of the at least one actuation signal (A2) is stored in the at least one non-volatile memory (12) in the airbag control device (7).

10. Method according to one of Claims 7 to 9,
**characterized in that** the second actuation time is selected to have the same length as the actuation time (t_{A}) .

## Revendications

1. Contrôleur de coussin gonflable de sécurité (7), le contrôleur de coussin gonflable de sécurité (7) étant configuré de telle sorte que celui-ci génère au moins un signal d'excitation (A1, A2) pendant un temps d'excitation (t_{A}) en fonction d'au moins un signal de capteur (C), le contrôleur de coussin gonflable de sécurité (7) étant en outre configuré de telle sorte que celui-ci peut maintenir l'au moins un signal d'excitation (A1, A2) pendant un temps de maintien (t_{H}) en cas de panne d'une tension d'alimentation (U), le contrôleur de coussin gonflable de sécurité (7) étant configuré avec au moins une mémoire non volatile (12) dans laquelle peut être enregistrée la génération de l'au moins un signal d'excitation (A1, A2),
**caractérisé en ce que**
le contrôleur de coussin gonflable de sécurité (7) est configuré de telle sorte que lors de la génération de l'au moins un signal d'excitation (A1, A2), un signal d'état (F) est stocké dans l'au moins une mémoire non volatile (12) ou dans une mémoire non volatile supplémentaire, lequel est de nouveau effacé lorsque l'au moins un signal d'excitation (A1, A2) a été généré pendant plus longtemps qu'un temps de mémorisation (t_{S}), le temps de mémorisation (t_{S}) étant plus long que le temps de maintien (t_{H}) et inférieur ou égal au temps d'excitation (t_{A}), un signal d'excitation (A2) étant de nouveau envoyé pendant un deuxième temps d'excitation dans le cas d'une entrée en service du contrôleur de coussin gonflable de sécurité (7) lorsque le signal d'état (F) est encore présent.

2. Contrôleur de coussin gonflable de sécurité, le contrôleur de coussin gonflable de sécurité (7) étant configuré de telle sorte que celui-ci génère au moins un signal d'excitation (A1, A2) pendant un temps d'excitation (t_{A}) en fonction d'au moins un signal de capteur (C), le contrôleur de coussin gonflable de sécurité (7) étant en outre configuré de telle sorte que celui-ci peut maintenir l'au moins un signal d'excitation (A1, A2) pendant un temps de maintien (t_{H}) en cas de panne d'une tension d'alimentation (U), le contrôleur de coussin gonflable de sécurité (7) étant configuré avec au moins une mémoire non volatile (12) dans laquelle peut être enregistrée la génération de l'au moins un signal d'excitation (A1, A2),
**caractérisé en ce que**
le contrôleur de coussin gonflable de sécurité (7) est configuré de telle sorte que lors d'une entrée en service du contrôleur de coussin gonflable de sécurité (7), un signal d'excitation (A2) est généré pendant un deuxième temps d'excitation si la génération de l'au moins un signal d'excitation (A1, A2) est enregistrée dans l'au moins une mémoire non volatile (12).

3. Contrôleur de coussin gonflable de sécurité, le contrôleur de coussin gonflable de sécurité (7) étant configuré de telle sorte que celui-ci génère au moins un signal d'excitation (A1, A2) pendant un temps d'excitation (t_{A}) en fonction d'au moins un signal de capteur (C), le contrôleur de coussin gonflable de sécurité (7) étant en outre configuré de telle sorte que celui-ci peut maintenir l'au moins un signal d'excitation (A1, A2) pendant un temps de maintien (t_{H}) en cas de panne d'une tension d'alimentation (U), le contrôleur de coussin gonflable de sécurité (7) étant configuré avec au moins une mémoire non volatile (12) dans laquelle peut être enregistrée la génération de l'au moins un signal d'excitation (A1, A2),
**caractérisé en ce que**
le contrôleur de coussin gonflable de sécurité (7) est configuré de telle sorte que lors d'une entrée en service du contrôleur de coussin gonflable de sécurité (7), un signal d'excitation (A2) est généré pendant un deuxième temps d'excitation sur demande d'un contrôleur supplémentaire si la génération de l'au moins un signal d'excitation (A1, A2) est enregistrée dans l'au moins une mémoire non volatile (12).

4. Contrôleur de coussin gonflable de sécurité selon l'une des revendications 1 à 3, **caractérisé en ce que** le deuxième temps d'excitation est choisi égal au temps d'excitation (t_{A}) .

5. Réseau électrique (1) dans un véhicule automobile, comprenant un réseau à haute tension (2) comportant au moins une batterie à haute tension (3), laquelle peut être déconnectée du réseau à haute tension (2) par le biais d'au moins un contacteur (4), et un réseau de bord à basse tension (5) comportant une batterie de réseau de bord (6), un contrôleur de coussin gonflable de sécurité (7) et un contrôleur de haute tension (8), le contrôleur de haute tension (8) étant configuré de telle sorte que celui-ci excite l'au moins un contacteur (4) au moins en fonction d'un signal d'excitation (A2) du contrôleur de coussin gonflable de sécurité (7), le contrôleur de haute tension (8) étant configuré avec une mémoire non volatile (13) dans laquelle peut être enregistrée sous la forme d'un signal (E) l'apparition d'un signal d'excitation (A2) du contrôleur de coussin gonflable de sécurité (7), le contrôleur de haute tension (8) étant configuré de telle sorte que lors de l'entrée en service, l'au moins un contacteur (4) n'est fermé que s'il n'existe pas d'entrée actuelle d'un signal (E) dans la mémoire non volatile (13),
**caractérisé en ce que**
le contrôleur de coussin gonflable de sécurité (7) est réalisé sous la forme d'un contrôleur de coussin gonflable de sécurité (7) selon l'une des revendications 1 à 4.

6. Réseau électrique (1) selon la revendication 5,
**caractérisé en ce que** le contrôleur de coussin gonflable de sécurité (7) est configuré avec un accumulateur d'énergie ou avec une source de tension auxiliaire (10) ou une source de tension auxiliaire (10) est associée au contrôleur de coussin gonflable de sécurité (7), au moyen de laquelle l'alimentation électrique (U) du contrôleur de coussin gonflable de sécurité (7) est maintenue pendant le temps de maintien (t_{H}) dans le cas d'une chute de tension.

7. Procédé de commande d'un réseau électrique (1) dans un véhicule automobile, le réseau électrique (1) comprenant un réseau à haute tension (3) comportant une batterie à haute tension (3), laquelle peut être déconnectée du réseau à haute tension (2) par le biais d'au moins un contacteur (4), et un réseau de bord à basse tension (5) comportant une batterie de réseau de bord (6), un contrôleur de coussin gonflable de sécurité (7) et un contrôleur de haute tension (8), le contrôleur de haute tension (8) excitant l'au moins un contacteur (4) au moins en fonction d'un signal d'excitation (A2) du contrôleur de coussin gonflable de sécurité (7), le contrôleur de haute tension (8) ainsi que le contrôleur de coussin gonflable de sécurité (7) étant respectivement configurés avec au moins une mémoire non volatile (12, 13) dans laquelle est enregistrée l'apparition d'un signal d'excitation du contrôleur de coussin gonflable de sécurité (7), l'au moins un contacteur (4) n'étant fermé lors de l'entrée en service du contrôleur de haute tension (8) que s'il n'existe pas d'entrée actuelle d'un signal d'excitation (A2) sous la forme d'un signal (E) dans la mémoire non volatile (13) du contrôleur de haute tension (8), le contrôleur de coussin gonflable de sécurité (7) délivrant le signal d'excitation (A2) pendant un temps d'excitation (t_{A}) lorsque l'alimentation électrique (U) est présente et le maintenant pendant au moins un temps de maintien (t_{H}) en cas de panne de l'alimentation électrique (U),
**caractérisé en ce que**
le contrôleur de coussin gonflable de sécurité (7), lors de la génération de l'au moins un signal d'excitation (A1, A2), stocke un signal d'état (F) dans l'au moins une mémoire non volatile (12) du contrôleur de coussin gonflable de sécurité (7) ou dans une mémoire non volatile supplémentaire du contrôleur de coussin gonflable de sécurité (7), le signal d'état (F) étant de nouveau effacé lorsque l'au moins un signal d'excitation (A1, A2) est généré pendant plus longtemps qu'un temps de mémorisation (t_{S}), le temps de mémorisation (t_{S}) étant plus long que le temps de maintien (t_{H}) et inférieur ou égal au temps d'excitation (t_{A}), un signal d'excitation (A2) étant de nouveau envoyé pendant un deuxième temps d'excitation dans le cas d'une entrée en service du contrôleur de coussin gonflable de sécurité (7) lorsque le signal d'état (F) est encore présent.

8. Procédé de commande d'un réseau électrique (1) dans un véhicule automobile, le réseau électrique (1) comprenant un réseau à haute tension (3) comportant une batterie à haute tension (3), laquelle peut être déconnectée du réseau à haute tension (2) par le biais d'au moins un contacteur (4), et un réseau de bord à basse tension (5) comportant une batterie de réseau de bord (6), un contrôleur de coussin gonflable de sécurité (7) et un contrôleur de haute tension (8), le contrôleur de haute tension (8) excitant l'au moins un contacteur (4) au moins en fonction d'un signal d'excitation (A2) du contrôleur de coussin gonflable de sécurité (7), le contrôleur de haute tension (8) ainsi que le contrôleur de coussin gonflable de sécurité (7) étant respectivement configurés avec au moins une mémoire non volatile (12, 13) dans laquelle est enregistrée l'apparition d'un signal d'excitation du contrôleur de coussin gonflable de sécurité (7), l'au moins un contacteur (4) n'étant fermé lors de l'entrée en service du contrôleur de haute tension (8) que s'il n'existe pas d'entrée actuelle d'un signal d'excitation (A2) sous la forme d'un signal (E) dans la mémoire non volatile (13) du contrôleur de haute tension (8) le contrôleur de coussin gonflable de sécurité (7) délivrant le signal d'excitation (A2) pendant un temps d'excitation (t_{A}) lorsque l'alimentation électrique (U) est présente et le maintenant pendant au moins un temps de maintien (t_{H}) en cas de panne de l'alimentation électrique (U),
**caractérisé en ce que**
lors d'une entrée en service du contrôleur de coussin gonflable de sécurité (7), un signal d'excitation (A2) est généré pendant un deuxième temps d'excitation si la génération de l'au moins un signal d'excitation (A2) est enregistrée dans l'au moins une mémoire non volatile (12).

9. Procédé de commande d'un réseau électrique (1) dans un véhicule automobile, le réseau électrique (1) comprenant un réseau à haute tension (3) comportant une batterie à haute tension (3), laquelle peut être déconnectée du réseau à haute tension (2) par le biais d'au moins un contacteur (4), et un réseau de bord à basse tension (5) comportant une batterie de réseau de bord (6), un contrôleur de coussin gonflable de sécurité (7) et un contrôleur de haute tension (8), le contrôleur de haute tension (8) excitant l'au moins un contacteur (4) au moins en fonction d'un signal d'excitation (A2) du contrôleur de coussin gonflable de sécurité (7), le contrôleur de haute tension (8) ainsi que le contrôleur de coussin gonflable de sécurité (7) étant respectivement configurés avec au moins une mémoire non volatile (12, 13) dans laquelle est enregistrée l'apparition d'un signal d'excitation du contrôleur de coussin gonflable de sécurité (7), l'au moins un contacteur (4) n'étant fermé lors de l'entrée en service du contrôleur de haute tension (8) que s'il n'existe pas d'entrée actuelle d'un signal d'excitation (A2) sous la forme d'un signal (E) dans la mémoire non volatile (13) du contrôleur de haute tension (8) le contrôleur de coussin gonflable de sécurité (7) délivrant le signal d'excitation (A2) pendant un temps d'excitation (t_{A}) lorsque l'alimentation électrique (U) est présente et le maintenant pendant au moins un temps de maintien (t_{H}) en cas de panne de l'alimentation électrique (U),
**caractérisé en ce que**
lors d'une entrée en service du contrôleur de haute tension (8), celui-ci envoie une demande au contrôleur de coussin gonflable de sécurité (7) si aucun signal d'excitation (E) n'est présent dans la mémoire non volatile (13) du contrôleur de haute tension (8), le contrôleur de coussin gonflable de sécurité (7), sur la demande, générant un signal d'excitation (A2) pendant un deuxième temps d'excitation si la génération de l'au moins un signal d'excitation (A2) est enregistrée dans l'au moins une mémoire non volatile (12) dans le contrôleur de coussin gonflable de sécurité (7).

10. Procédé selon l'une des revendications 7 à 9,
**caractérisé en ce que** le deuxième temps d'excitation est choisi de longueur égale au premier temps d'excitation (t_{A}) .
